**Europäisches Patentamt**

**European Patent Office**

**Office européen des brevets**

(11) Veröffentlichungsnummer: **0 081 629**
**B1**

(12) # EUROPÄISCHE PATENTSCHRIFT

(45) Veröffentlichungstag der Patentschrift:
17.04.85

(51) Int. Cl.⁴: **G 01 F 23/36**

(21) Anmeldenummer: **82107425.9**

(22) Anmeldetag: **16.08.82**

(54) **Flüssigkeitsniveaugeber.**

(30) Priorität: **21.11.81 DE 3146213**

(43) Veröffentlichungstag der Anmeldung:
**22.06.83 Patentblatt 83/25**

(45) Bekanntmachung des Hinweises auf die Patenterteilung:
**17.04.85 Patentblatt 85/16**

(84) Benannte Vertragsstaaten:
**DE FR GB NL SE**

(56) Entgegenhaltungen:
**DE - A - 2 720 101**
**DE - A - 2 739 901**
**DE - A - 2 740 653**
**US - A - 4 337 657**

(73) Patentinhaber: **VDO Adolf Schindling AG,**
**Gräfstrasse 103, D-6000 Frankfurt/Main (DE)**

(72) Erfinder: **Rau, Karl, Blumenstrasse 20, D-6052 Mühlheim**
**(DE)**
Erfinder: **Haub, Martin, Bahnstrasse 54,**
**D-6374 Steinbach/Ts. (DE)**

(74) Vertreter: **Könekamp, Herbert, Dipl.-Ing., Sodener**
**Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Beschreibung

Die Erfindung bezieht sich auf einen Flüssigkeitsniveaugeber, insbesondere für Kraftfahrzeugtanks, bestehend aus einem schwenkbar gelagerten Hebel, der einen Schwimmer trägt und mit einem Schleifkontakt in Wirkverbindung steht, der bei Schwenkung des Hebels entlang eines elektrischen Widerstandes bewegbar ist. Solche Flüssigkeitsniveaugeber sind häufig in Kraftfahrzeugtanks heutiger Kraftfahrzeuge angeordnet, um einen Meßwert für die Füllstandsanzeige zu erzeugen. Sie sind deshalb allgemein bekannt.

Die heutigen Vergaserkraftstoffe enthalten gegenüber früher zunehmend Methanol. Es hat sich gezeigt, daß durch dieses Methanol Teile besonders leicht korrodieren, in denen Strom fließt. Deshalb muß verhindert werden, daß zumindest der elektrische Widerstand und der Schleifer des Flüssigkeitsniveaugebers mit dem Benzin im Tank in Berührung kommen. Dieses könnte man natürlich dadurch erreichen, daß man den Flüssigkeitsniveaugeber in einem flüssigkeitsdichten Gehäuse anordnet. Aus diesem Gehäuse müßte allerdings der den Schwimmer tragende Hebel herausgeführt werden. Abgesehen davon, daß ein solches flüssigkeitsdichtes Gehäuse relativ teuer in der Herstellung wäre, würde die notwendige Abdichtung des herausragenden Hebels zu Reibung führen, die eine genaue Niveauanzeige verhindern könnte.

Der Erfindung liegt die Aufgabe zugrunde, einen Flüssigkeitsniveaugeber der eingangs genannten Art zu entwickeln, der auf einfache Weise vor einem Kontakt mit dem zu messenden Medium geschützt ist und der zur Erzielung hoher Meßgenauigkeit möglichst reibungsarm arbeitet.

Diese Aufgabe wird erfindungsgemäß dadurch gelöst, daß zumindest der Schleifkontakt und der elektrische Widerstand in einem nach unten hin offenen, ansonsten jedoch abgedichteten glockenartigen Bauteil angeordnet sind.

Der erfindungsgemäße Flüssigkeitsniveaugeber arbeitet nach dem Tauchglockenprinzip. Auch wenn der zu messende Flüssigkeitsspiegel bis oberhalb des Schleifers und des elektrischen Widerstandes steigt, kommen diese Teile mit der Flüssigkeit nicht in Berührung, da sich in dem glockenartigen Bauteil eine Luftblase bildet, die ein Eindringen von Flüssigkeit verhindert. Durch diese Gestaltung ist sichergestellt, daß die stromführenden Teile des Flüssigkeitsniveaugebers nicht durch elektro-chemische Korrosion angegriffen werden können. Da das glockenförmige Bauteil nach unten hin offen ist, kann der den Schwimmer tragende Hebel völlig frei aus dem Bauteil herausgeführt werden. Es sind daher keine Dichtungen erforderlich, die die Herstellungskosten des Flüssigkeitsniveaugebers erhöhen und zu Reibungen zwischen der Dichtung und dem herausgeführten Hebel führen würden. Solche Reibungen verringerten die Meßgenauigkeit des Flüssigkeitsniveaugebers.

Einen besonders guten Schutz vor der zu messenden Flüssigkeit erhält man, wenn das glockenartige Bauteil bis unterhalb der Lagerung des Hebels verläuft. In einem solchen Fall ist auch die Welle des Hebels und ihre Lagerung vor Kontakt mit der zu messenden Flüssigkeit geschützt, so daß man zum Beispiel die Welle auch in Metall ausführen kann.

Gemäß einer weiteren vorteilhaften Ausführungsform ist der Schleifkontakt im Bereich des freien Armendes eines sich von der Drehachse des Hebels zum Widerstand erstreckenden Arms aus Kunststoff befestigt. Der Schleifkontakt kann dann über eine flexible isolierte Leitung mit den im oberen Teil des glockenartigen Bauteils verbunden sein. Bei einer solchen Ausführungsform ist sichergestellt, daß auch bei Schwappbewegungen des Kraftstoffs im Tank oder bei in das glockenartige Bauteil spritzendem Kraftstoff eine mögliche Korrosion an den elektrisch leitenden Teilen auf ein Mindestmaß reduziert ist.

Die Schwenkbewegung des Hebels läßt sich auf besonders einfache Weise nach beiden Seiten hin begrenzen, wenn beiderseits des den Schleifkontakt tragenden Armes gabelartig zwei Anschläge vorgesehen sind. Ferner hat es sich als zweckmäßig erwiesen, die Anschläge relativ zum Schleifkontakt verstellbar auszubilden, da sich dann eine besonders einfache Eichmöglichkeit ergibt. Anstelle dieser Ausführungsform oder auch in Verbindung mit dieser kann das glockenartige Bauteil in vorteilhafter Weise mit einem quer zur Ebene des elektrischen Widerstandes verlaufenden Zapfen zur schwenkbaren Lagerung in einem an dem Tank befestigbaren Flansch versehen sein, so daß durch Verschwenken des Bauteils ebenfalls eine Eichung durchgeführt werden kann. Eine weitere Möglichkeit wäre schließlich, den elektrischen Widerstand lageveränderlich im Bauteil anzuordnen.

In einer aus fertigungstechnischen Gründen bevorzugten Ausführungsform bilden der Hebel, der den Schleifkontakt tragende Arm und — so vorhanden — die Anschläge eine einstückige Einheit aus Kunststoff.

Die Erfindung läßt zahlreiche Ausführungsmöglichkeiten zu. Eine davon ist schematisch in der Zeichnung dargestellt und wird nachfolgend beschrieben. Es zeigt

Fig. 1 eine teilgeschnittene Vorderansicht eines erfindungsgemäßen Flüssigkeitsniveaugebers und

Fig. 2 eine teilgeschnittene Seitenansicht des Flüssigkeitsniveaugebers gemäß Fig. 1.

Der Flüssigkeitsniveaugeber umfaßt ein glockenartiges Bauteil 1, welches nach oben und zu den Seiten hin völlig geschlossen, nach unten jedoch offen ist. Im unteren Teil des glockenartigen Bauteils 1 ist in zwei Seitenwänden eine Welle 2 drehbar gelagert, die aus Kunststoff besteht und an ihrem Umfang in einen Arm 4 übergeht. An einem Ende der Welle 2 ist außerhalb des Bauteils 1 der Hebel 3 angeformt, in dem eine Stange 6 eingerastet ist, die an ihrem dem Hebel 3 abgewandten Ende einen Schwimmer 7 trägt. Die Welle 2, der Hebel 3 und der Arm 4 bilden eine einstückige Einheit aus einem thermoplastischen Kunststoff.

Der Arm 4 trägt an seinem freien Ende einen Schleifkontakt 8 aus elektrisch leitendem Material, der mit Federkraft gegen einen elektrischen Widerstand 9 anliegt. Dieser Widerstand ist vorzugsweise ein Dickschichtwiderstand. Der Schleifkontakt 8 ist über ein elektrisches Kabel 10 mit einer Spannungsquelle verbunden.

Um den Flüssigkeitsniveaugeber eichen zu können, ist an der Seitenwand des glockenartigen Bauteils 1, die innenseitig den Widerstand 9 hat, quer zur Ebene des Widerstandes 9 außenseitig ein Zapfen 11 angeformt. Mit diesem Zapfen 11 kann das glockenartige Bauteil 1 in eine Öffnung einer nicht dargestellten Halterung, wie zum Beispiel eines Flansches, gesteckt werden. Durch den Zapfen 11 wird es möglich, das glockenartige Bauteil 1 zu verschwenken, so daß die Nullstellung des Flüssigkeitsniveaugebers verändert werden kann.

Um den maximal möglichen Schwenkweg des Arms 4 nach beiden Seiten hin zu begrenzen, sind auf der Welle 2 zwei parallel zum Arm 4 verlaufende gabelartige Anschläge 12 und 13 angeformt, zwischen denen der Arm 4 verläuft. Diese Anschläge 12 und 13 sind so bemessen, daß in der einen Endstellung der Anschlag 12 innenseitig gegen eine Seitenwand des glockenartigen Bauteils 1, in der anderen Endstellung der Anschlag 13 gegen die gegenüberliegende Seitenwand des glockenartigen Bauteils 1 zur Anlage kommt.

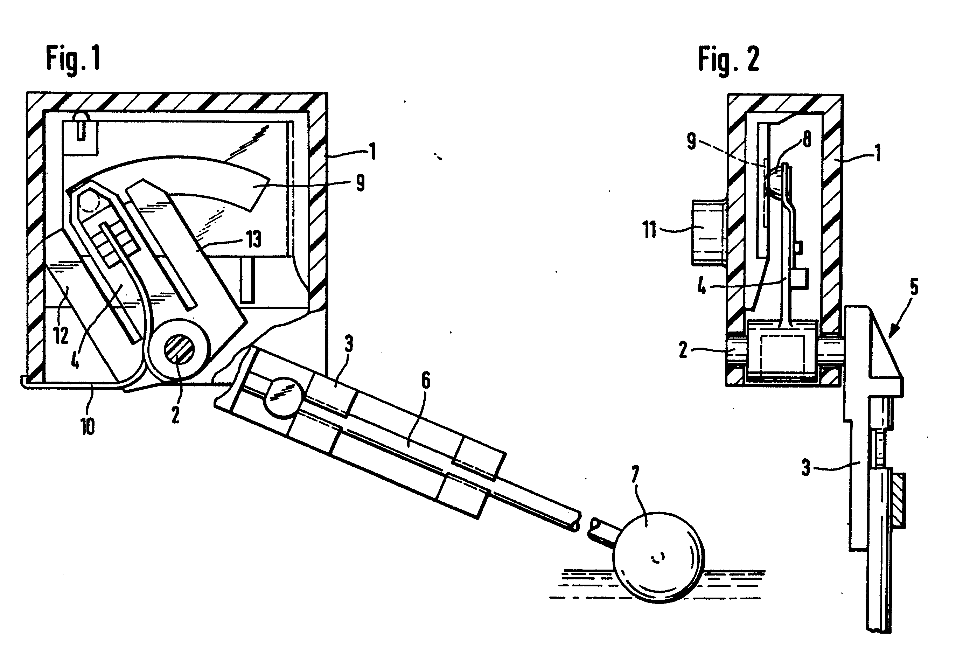

Die Funktion des erfindungsgemäßen Flüssigkeitsniveaugebers ist einfach. In der dargestellten Stellung vermag elektrischer Strom durch das Kabel 10 über den Schleifer 8 in den Widerstand 9 und von dort über ein nicht dargestelltes Anschlußkabel an der in Fig. 1 gesehen linken Seite des Widerstandes 9 zu einem Anzeigeinstrument zu fließen. Sinkt der Flüssigkeitsspiegel, so sinkt auch der Schwimmer 7. Dadurch verschwenken sich der Hebel 3 und der Arm 4 im Uhrzeigersinn. Der Schleifkontakt 8 wandert durch diese Schwenkbewegung auf dem Widerstand 9 in der Zeichnung gesehen nach rechts, wodurch sich der Widerstandswert im elektrischen Kreis erhöht, was zu einer Änderung des Zeigerausschlags des Anzeigeinstruments führt.

**Patentansprüche**

1. Flüssigkeitsniveaugeber, insbesondere für Kraftfahrzeugtanks, bestehend aus einem schwenkbar gelagerten Hebel (3), der einen Schwimmer (7) trägt und mit einem Schleifkontakt (8) in Wirkverbindung steht, der bei Schwenkung des Hebels entlang eines elektrischen Widerstands (9) bewegbar ist, dadurch gekennzeichnet, daß zumindest der Schleifkontakt (8) und der elektrische Widerstand (9) in einem nach unten hin offenen, ansonsten jedoch abgedichteten glockenartigen Bauteil (1) angeordnet sind.

2. Flüssigkeitsniveaugeber nach Anspruch 1, dadurch gekennzeichnet, daß das glockenartige Bauteil (1) bis unterhalb der Lagerung des Hebels (5) verläuft.

3. Flüssigkeitsniveaugeber nach Anspruch 1 oder 2, dadurch gekennzeichnet, daß der Schleifkontakt (8) im Bereich des freien Armendes eines sich von der Drehachse des Hebels (5) zum Widerstand (9) erstreckenden Arms (4) aus Kunststoff befestigt ist.

4. Flüssigkeitsniveaugeber nach Anspruch 3, dadurch gekennzeichnet, daß beiderseits des den Schleifkontakt (8) tragenden Armes gabelartig zwei Anschläge (12, 13) vorgesehen sind.

5. Flüssigkeitsniveaugeber nach Anspruch 4, dadurch gekennzeichnet, daß die Anschläge (12, 13) relativ zum Schleifkontakt (8) verstellbar sind.

6. Flüssigkeitsniveaugeber nach einem der Ansprüche 3 bis 4, dadurch gekennzeichnet, daß der Hebel und der den Schleifkontakt (8) tragende Arm (4) sowie gegebenenfalls die Anschläge (12, 13) eine einstückige Einheit aus Kunststoff bilden.

7. Flüssigkeitsniveaugeber nach einem der Ansprüche 1 bis 6, dadurch gekennzeichnet, daß das glockenartige Bauteil (1) mit einem quer zur Ebene des elektrischen Widerstandes (9) verlaufenden Zapfen (11) zur schwenkbaren Lagerung in einem Flansch versehen ist.

**Claims**

1. Liquid level detector, especially for motor vehicle tanks, comprising a pivotably mounted lever (3) which supports a float (7) and is operatively connected to a sliding contact (8) movable along an electrical resistor (9) when the lever is moved pivotably, characterised in that at least the sliding contact (8) and the electrical resistor (9) are arranged in a bell-shaped part (1) which is downwardly open but which is otherwise sealed.

2. Liquid level detector according to claim 1, characterised in that the bell-shaped part (1) extends to below the bearing arrangement of the lever (5).

3. Liquid level detector according to claim 1 or 2, characterised in that the sliding contact (8) is secured in the region of the free end of a synthetic plastic material arm (4), which arm extends from the pivoting axis of the lever (5) to the resistor (9).

4. Liquid level detector according to claim 3, characterised in that two abutments (12, 13) are arranged in the manner of a fork at the two sides of the arm supporting the sliding contact (8).

5. Liquid level detector according to claim 4, characterised in that the abutments (12, 13) are adjustable relatively to the sliding contact (8).

6. Liquid level detector according to one of claims 3 and 4, characterised in that the lever and the arm (4) comprising the sliding contact (8), and also the abutments (12, 13) if appropriate, form an integral unit of synthetic plastic material.

7. Liquid level detector according to one of claims 1 to 6, characterised in that the bell-shaped part (1) is provided with a stud (11) situated transversely to the plane of the electrical resistor (9), for pivotable support in a flange.

**Revendications**

1. Indicateur de niveau de liquide, notamment pour réservoirs de véhicules automobiles, consistant en un levier (3) monté à pivotements, qui supporte un flotteur (7) et est en liaison efficace avec un curseur de contact (8) pouvant être déplacé le long d'une résistance électrique (9) lors du pivotement dudit levier, indicateur caractérisé par le fait qu'au moins le curseur de contact (8) et la résistance électrique (9) sont incorporés dans un élément constitutif (1) en forme de cloche qui est ouvert vers le bas, mais est isolé hermétiquement pour le reste.

2. Indicateur de niveau de liquide selon la revendication 1, caractérisé par le fait que l'élément constitutif (1) en forme de cloche s'étend jusqu'au-dessous du système de montage du levier (5).

3. Indicateur de niveau de liquide selon la revendication 1 ou 2, caractérisé par le fait que le curseur de contact (8) est fixé au voisinage de l'extrémité libre d'un bras (4) en matière plastique s'étendant de l'axe de rotation dudit levier (5) jusqu'à la résistance (9).

4. Indicateur de niveau de liquide selon la revendication 3, caractérisé par le fait que deux butées (12, 13) agencées en une fourche sont prévues de part et d'autre du bras supportant le curseur de contact (8).

5. Indicateur de niveau de liquide selon la revendication 4, caractérisé par le fait que les butées (12, 13) peuvent être réglées par rapport au curseur de contact (8).

6. Indicateur de niveau de liquide selon l'une des revendications 3 à 4, caractérisé par le fait que le levier et le bras (4) supportant le curseur de contact (8), ainsi qu'éventuellement les butées (12, 13), forment un ensemble monobloc en matière plastique.

7. Indicateur de niveau de liquide selon l'une des revendications 1 à 6, caractérisé par le fait que l'élément constitutif (1) en forme de cloche est muni d'un tourillon (11) s'étendant perpendiculairement au plan de la résistance électrique (9), afin d'assurer le montage pivotant dans une patte.

# Fig.1

# Fig. 2

0 081 629